# EUROPEAN PATENT APPLICATION

(11) **EP 3 163 152 A1**
(43) Date of publication of application: **03.05.2017**
(21) Application number: 15799871.7
(22) Date of filing: 20.04.2015
(51) Int. Cl.: F21S 8/02

(54) **RECESS-MOUNTABLE MODULAR DEVICE WITH A BUILT-IN LIGHT SOURCE**

(30) Priority: 30.05.2014 ES 201430827
(71) Applicant: Latras Investments S.L., 46190 Valencia (ES)
(72) Inventor: LATRAS IBORRA, Luis, 46182 Valencia (ES); SALDAÑA ACLE, Ruben, 46006 Valencia (ES)
(74) Representative: Alier Benages, Elisabet
(86) International application number: PCT/ES2015/070315
(87) International publication number: WO 2015/181413

(57) **Abstract**

The invention relates to a recess-mountable modular device with a built-in light source, comprising a light source, a reflector, a bell-shaped element and an accessorial shim, which can be fitted in a recess-mountable manner either in purpose-made holes or in existing holes, and is able to cover any recess diameter simply by using or not using the accessorial shim for integration into the ceiling.

## Description

### Object of the invention

The object of the present invention is to provide a modular luminaire suitable to be recessed, for instance on ceilings, incorporating a light source, preferably LED type, designed specifically for embedding engaging holes, made on purpose for its installation or previously existing for having lodged other light fixtures, thus facilitating the direct replacement of previous light fixtures.

### Background of the invention

The evolution of light sources in luminaires has caused a great morphological variety, of sizes and designs, among the light fixtures with traditional light sources and contemporary luminaires with integrated light sources, less energy consuming, more efficient, advanced, durable and prevailing. Traditional sources of light include incandescent, fluorescent, magnetic induction, sodium vapor, with metal additives, such as metal halides, halogen incandescent and other incandescent technology systems, which are still present in many architectural spaces, and among the current luminaires, those in which the light source are LED, OLED and the like, can be mentioned.

This morphological difference, of sizes and designs, has meant that updating of the light sources of the light fixtures using traditional light sources is being conducted largely through contemporary direct replacement light sources. That is, keeping the luminaire, but updating its light source.

This situation occurs especially in light fixtures, such as recessed luminaires, which installation requires modifying the surfaces where they are embedded, such as ceilings.

In many cases, especially in the aforementioned devices that, because of their type of installation require embedding, the chosen option is to upgrade traditional light sources to alternative contemporary direct replacement light sources applied to existing luminaires. This is due to the obvious drawbacks of finding on the market a luminaire or luminaire system, with an integrated contemporary light source, that can be adapted to the diameters of existing recess holes without the need of work, painting or other reconditioning works on the surface.

The present invention provides a modular luminaire device, with integrated light source, suitable for recessed installation, either in holes made on purpose for its installation or in existing holes. All, with the ability to cover any embedding diameter solely with the invention, or by coupling it to its bevel accessory for surface integration.

In any case, such bevel accessories will only be necessary in the event that the bell of the modular device alone does not fully and aesthetically cover the whole diameter of the embedding hole. Furthermore, the modular device object of the present invention will be able to cover embedding holes of any diameter, as indicated, either with the elements of the luminaire or by adding to these said bevel accessories.

### Description of the invention

The recessed modular device with integrated light source object of the present invention comprises a light source set, a reflector, a bell and a bevel accessory, such that:
a. the bell has, both inner and outer, the approximate shape of a hollow truncated cone. Said bell comprises:
   - a first surface, approximately shaped as a circular crown, located on the outer edge of the larger diameter base of said bell. The aforementioned first surface has an inner diameter equal to or less than the inner diameter of the larger diameter base of said bell, and the outer diameter of said first surface is greater than the aforementioned outer larger diameter base of the bell,
   - first removable attachment means on the outer face of the bell,
   - second removable attachment means at the edge of the bell's base of smaller diameter and first removable fastening means, on which a spring is disposed, arranged on the outer face of the bell.
b. the reflector, in which outer edge are suitably arranged third removable attachment means complementary to the second removable attachment means disposed in the bell, the inner side of the reflector is properly shaped in order to obtain the predetermined aperture angle of the light beam emitted by light source,
c. the light source is provided with fourth removable attachment means complementary to the first removable attachment means disposed in the bell such that the light source is suitably disposed in relation to the reflector.

### Description of figures

Figure 1: exploded view drawing of the recessed modular device with integrated light source
Figure 2: elevation of a preferred embodiment of the invention
Figure 3: section of the invention

### Reference list

- 1.: Recessed modular device with integrated light source
- 2.: Bell
- 3.: Reflector
- 4.: Light source
- 5.: Bevel accessory
- 6.: First fastening means

### Preferred embodiment of the invention

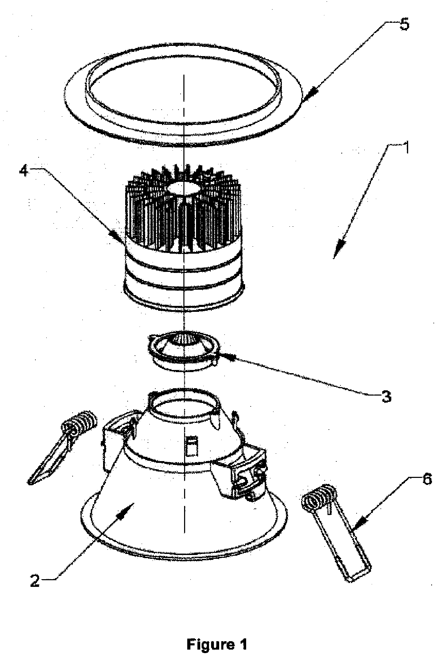

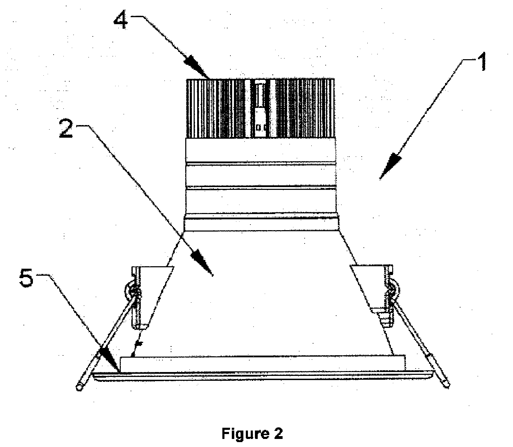

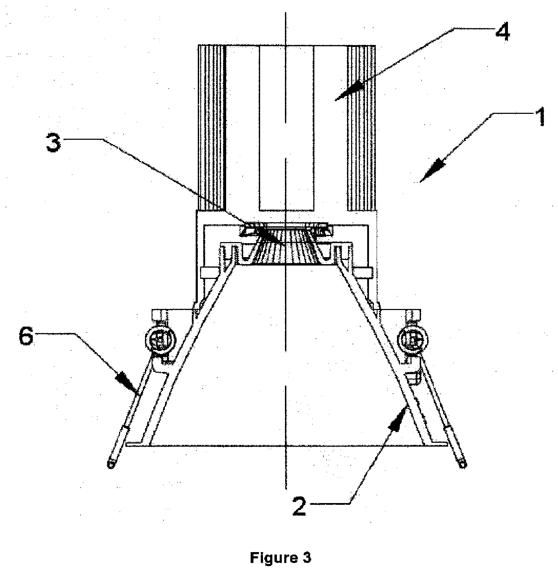

Figures 1 - 3 show two preferred embodiments of the recessed modular device with integrated light source (1). Figures 1 and 2 show a first preferred embodiment and figure 3 shows a second preferred embodiment of the invention incorporating the bevel accessory (5).

The light source (4) is attached to the bell (2) by first removable attachment means and fourth removable attachment means complementary to the first attachment means, preferably clip-type, so that a specific light source (4) can be coupled with multitude of bells (2) with different measures of height and diameter. The reflector (3) that determines the angle of the light beam produced by the light source (4) is joined to the top of the bell (2) by second and third removable attachment means. The light source (4) is preferably of LED, OLED or the like.

In order to attach the invention to the ceiling, the bell (2) comprises first removable attachment means (6) that, in collaboration with the first surface in the shape of circular crown or with the bevel accessory (5), imprison the ceiling between them, fixing the invention, said first attachment means (6) are preferably elongated pincers-like elements joined to the bell and in which a spring pushing them to the embedding surface is disposed.

The bell (2) performs decorative functions and sets back the light source in relation to the embedding plane avoiding or reducing glare.

Figures 1 and 3 show another preferred embodiment in which there is disposed a bevel accessory (5) formed by a hollow cylinder whose inner diameter is approximately equal to the outer diameter of the first surface disposed on the bell (2), in the lower base of said hollow cylinder is arranged a second surface approximately having a shape of a circular crown, the inner diameter of said second surface is smaller than the outer diameter of the first surface of the bell (2) and the outer diameter of the second surface is larger than said outer diameter of the first surface of said bell (2), which enables the aforementioned bell (2) to adapt to holes of different diameters.

The inner surface of the reflector (3) can have the shape of an approximate truncated cone, approximately parabolic or another.

Of course, the inner surface of the reflector and the inner surface of the bell are made of materials that reflect light and their finishes increase light reflectance.

## Claims

1. Recessed modular device with integrated light source (1) **characterized in that** it comprises a light source (4), a reflector (3), a bell (2) and a bevel accessory (5), such that:
a. the bell (2) has, both inner and outer, the approximate shape of a hollow truncated cone. Said bell (2) comprises:
• a first surface, approximately shaped as a circular crown, located on the outer edge of the larger diameter base of said bell (2) . The aforementioned first surface has an inner diameter equal to or less than the inner diameter of the larger diameter base of said bell (2), and the outer diameter of said first surface is greater than the aforementioned outer larger diameter base of the bell (2),
• first removable attachment means on the outer face of the bell (2),
• second removable attachment means at the edge of the bell's (2) base of smaller diameter and
• first removable fastening means (6), on which a spring is disposed, arranged on the outer face of the bell (2).
b. the reflector (3), in which outer edge are suitably arranged third removable attachment means complementary to the second removable attachment means disposed in the bell (2), the inner side of the reflector (3) is properly shaped in order to obtain the predetermined aperture angle of the light beam emitted by light source (4),
c. the light source (4) is provided with fourth removable attachment means complementary to the first removable attachment means disposed in the bell (2) such that the light source is suitably disposed in relation to the reflector (3).
d. the bevel accessory (5) is formed by a hollow cylinder whose inner diameter is approximately equal to the outer diameter of the first surface of the bell (2), in the lower base of said hollow cylinder there is arranged a second surface approximately having a shape of a circular crown, the inner diameter of said second surface is smaller than the outer diameter of the first surface of the bell (2) and the outer diameter of the second surface is larger than said outer diameter of the first surface of the bell (2).

2. Recessed modular device with integrated light source (1) according to claim 1, **characterized in that** the light source (4) is LED type.

3. Recessed modular device with integrated light source (1) according to claim 1, **characterized in that** the light source (4) is OLED type or the like.

4. Recessed modular device with built-in light source (1), according to any of the preceding claims, **characterized in that** the first fastening means are elongated pincers-like elements.

5. Recessed modular device with built-in light source (1), according to any of the preceding claims, **characterized in that** the first and fourth removable attachment means are clip-type.

6. Recessed modular device with built-in light source (1) according to any of the preceding claims, **characterized in that** the inner surface of the reflector (3) has approximately the shape of a truncated cone.

7. Recessed modular device with built-in light source (1) according to any of claims 1-5, **characterized in that** the inner surface of the reflector (3) has an approximately parabolic shape.

8. Recessed modular device with built-in light source (1) according to any of the preceding claims, **characterized in that** the inner surface of the reflector (3) and the inner surface of the bell (2) are made of light reflective materials and it has finishes that increase light reflectance.
